Europäisches Patentamt

European Patent Office  (11) Publication number: **0 155 050**

Office européen des brevets  **B1**

## (12) EUROPEAN PATENT SPECIFICATION

(45) Date of publication of patent specification: **05.09.90**

(21) Application number: **85200298.9**

(22) Date of filing: **01.03.85**

(51) Int. Cl.⁵: **G 06 K 19/04,** G 06 K 7/10, B 65 G 47/49

(54) Device for providing an article, more in particular a container, with a selectively adjustable code, and reading apparatus for recognizing such a code.

(30) Priority: **02.03.84 NL 8400688**

(43) Date of publication of application:
**18.09.85 Bulletin 85/38**

(45) Publication of the grant of the patent:
**05.09.90 Bulletin 90/36**

(84) Designated Contracting States:
**BE DE FR GB IT NL SE**

(56) References cited:
**DE-A-2 233 964**
**FR-A-2 031 646**
**FR-A-2 360 357**
**US-A-3 643 065**
**US-A-3 751 640**

**IBM TECHNICAL DISCLOSURE
BULLETIN, vol.17, no.7, december 1974, 1985-
1986; New York, US, R.J.Kulikowsky et al.:"Two
sensor bar-code scanner using sensor spacing
as a reference"**

(73) Proprietor: **Koninklijke PTT Nederland N.V.
P.O. Box 95321
NL-2509 CH The Hague (NL)**

(72) Inventor: **Bosman, Frans Leendert
30b Strobloemstraat
NL-3053 EX Rotterdam (NL)**
Inventor: **van den Steen, Casper Gerard
46 Frans Halsstraat
NL-2712 JV Zoetermeer (NL)**

(56) References cited:
**IBM TECHNICAL DISCLOSURE BULLETIN,
vol.17, no.7, December 1974, pages 1987-
1988; New York, US, R.J.Kulikowsky et al.,"Three
sensor bar-code scanner using sensor spacing
as a reference"**

## Description

### A. Background of the Invention
#### 1. Field of Invention

This invention relates to an encoding device for applying to an article, such as a container, a selectively adjustable code, and reading apparatus for recognizing such code. The automated handling of articles, such as containers, carried by a conveyor is important in the operation of post handling offices, warehouses, etc. The articles, such as for instance containers, having letters stored therein are to be routed by the conveyor selectively to various destinations automatically, economically, and in a reliable manner. At each location where a point or switch has been included in the conveying-circuit path a code reader is installed for reading the code pattern of an arriving container in order to appropriately set the associated switch into a condition whereby the container is enabled to reach its desired destination corresponding to the setting of the code read out therefrom.

#### 2. Prior Art

Encoding devices and corresponding reading devices for the above indicated ends are known from the French patent application FR—A—2360357 and FR—A—2302562, and the US patent US 3643065.

The known encoding devices include one or more linear arrays of equally spaced reflector elements which each by their linear disposition represent a single code (which may correspond with e.g. a decimal digit), and per array one or more selectively adjustable cursors each for covering and/or indicating a single one of the reflector elements. In case of indicating there may be more than one independent cursor, carrying itself a reflector element outside the path of the linear array, to increase the number of selectable codes. In case of decimal digits the analogue representation of a selected code can be made visible simultaneously for direct human inspection by numbering the reflector elements. A selected code may be read by reading apparatus which include a number of photo sensitive sensor elements for detecting light beams reflected by the reflector elements. For that end the encoding device and the reading apparatus are brought into a passing movement relative to each other in a direction mainly in parallel with the path of the linear array. Each linear array may be bounded by extra reflector elements which are used for control purposes.

Reading apparatus known from the cited prior art may further comprise shift register means for storing in a binary way the code read by detecting the consecutively received light beams, or counter means per array or cursor for counting the detected light beams. Shift register means or counted means may be controlled by detecting the simultaneous reception of light beams from adjacent reflector elements, or from a reflector element of the array and that one of the indicating cursor by at least two sensor elements being in a defined spaced relation for that purpose.

Encoding devices using a cursor in combination with a linear array in principle have the advantage of the simplicity in adjusting a code and its ease readability indeed. Moreover the corresponding reading devices are generally rather simple and not expensive. However, they are still rather unreliable. Cursors have usually the disadvantage to shift or jump rather easily. The reflector elements and cursors are rather unprotected against possible damaging influences from the outside. Moreover the chance of reduction of the reflecting quality of the reflector elements as a consequence of damaging or dirtying — with the consequence that a reflected light beam becomes too weak for being detectable as such — increases with the number of used reflector elements. An encoding device for facilitating the automatic sorting of mail be optical scanning apparatus, which does not have the disadvantage of the rather vulnerable reflector elements of the mentioned 'cursor technics' is known from US patent 4,317,030. In accordance with this prior art each mailing package is provided with a first sheet having a distinct optical reflectivity, and a second sheet of contrasting reflectivity, overlying the first sheet and having a prearranged array of apertures therethrough. The array of apertures is coded to represent a desired address. By causing the first sheet to underlie such a coded array of apertures the scanning equipment is enabled to read the desired address code. The array of apertures can be punched through said second sheet, and the first sheet is caused to underlie such array of apertures at a stationary position relative to said second sheet.

The second sheet may be an envelope with two different arrays of apertures which arrays in combination with the first sheet in two different positions may represent an original address and a return address. Each different code to be encoded by means of such an encoding device is however completely determined by the pattern in which the apertures of the array of punched apertures have been distributed over a certain area of the second sheet. An underlying first sheet with its contrasting optical reflectivity permits only its optical readability by automatic scanning apparatus. Therefore the number of selectable codes by one and the same specimen of this known encoding apparatus is very restricted, and consequently also its reusability.

Moreover the above reference is silent as to any particulars regarding structure and operation of automatic scanning apparatus for reading a code pattern of the above type.

### B. Summary of the Invention

The invention provides an encoding device for applying an optically readable coded array of binary code elements to an article, including a first sheet and a second sheet overlying said first sheet and having an array of apertures therethrough, said first sheet having a distinct surface area with an optical reflectivity which is contrasting to the optical reflectivity of said second sheet whereby said apertures in a position overlying said distinct surface area provide said coded array, which device does not have the indicated disadvantages of the prior art but on the other hand has the advantages of the mentioned 'cursor technics'.

The invention is therefore characterized in that

said array of apertures is disposed on a linear path;

said distinct area of said first sheet is shaped and dimensioned in such a manner that its longitudinal dimension corresponds to the longitudinal dimension of said linear path;

said first sheet and said second sheet are mounted for a relative sliding movement to each other for shifting said distinct area and said linear path relative to each other in a more or less overlapping way for selectively setting them in one out of at least 2n different relative positions to provide for one out of 2n possible different and distinct binary coded arrays, wherein n is the number of said apertures;

said second sheet having means for displaying a restricted area of said first sheet spaced from said distinct surface;

a row of 2n different symbols (decimal digits 0 through 9), representative for the 2n different coded arrays in a one-one correspondence, being provided within an elongated area of said first or said second sheet, whereby any selected one of said codes and its associated one of said symbols, respectively are simultaneously perceivable through said array and said display means, respectively.

In an aspect of the invention said second sheet of the encoding device has been provided with at least one, and preferably two reference surface areas having optical reflectivity which is contrasting to the optical reflectivity of its background on said second sheet, and being symmetrically positioned relative to opposite ends of said array of apertures.

The invention implies a way of coding which has the feature that if counting the number of binary "1" states of the array of apertures of a selected coded array this number can represent two and only two different coded arrays.

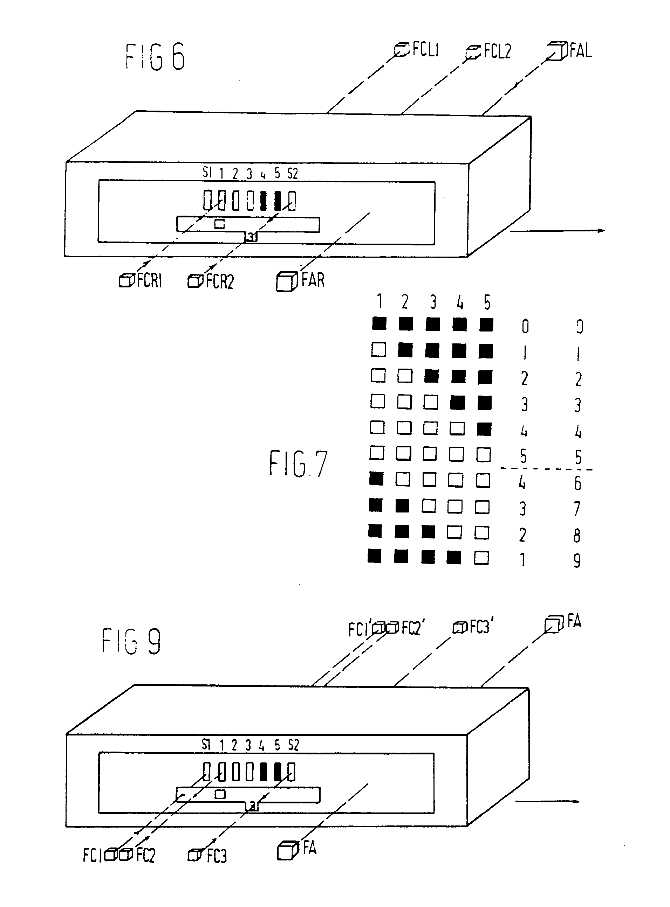

Inspection of the code table corresponding with this way of coding (see Figure 7 for n=5) shows that this ambiguity can be solved by further knowledge of the binary state of a fixed chosen aperture. Therefore in a further aspect of the invention reading device for use in combination with an encoding device according to the invention comprises

(a) first light sensor means for the reception of light beams during said movement consecutively reflected by said at least one reference surface area and said apertures of said array of apertures;

(b) counting means for counting the number of light beams reflected from said array of apertures consecutively received by said first light sensor means after the reception of the light beam from said at least one reference surface area;

(c) second light sensor means for the reception of said light beams, in such a spaced relation to the first sensor means as to permit the simultaneous reception of a light beam reflected by a reference surface area and a light beam reflected by one of said apertures;

(d) comparator means for comparing to each other signals simultaneously received from said first and said second light sensor means, which signals are responsive to the reception of said light beams, to produce a control signal indicating that the compared signals have the same binary value or not; and

(e) control means for producing an output signal representing uniquely said selected one of said coded arrays, said output signal corresponds to said counted number or to the complement of said counted number with respect to 2n in dependence on said control signal.

The reading device known from Figure 3A of the French application FR 2360357 compares signals simultaneously received from two adjacent reflecting areas by two spaced sensor elements. However, one of the signals has the meaning of a gate signal i.e. its presence implies that a pulse signal received from the other sensor element may be counted by counting means.

A significant advantage of the invention lies in the convenient and reliable operation of the encoding device. When set to represent any one of the different and distinct binary codes, its corresponding decimal representation is concurrently displayed. Thereby unskilled personnel is enabled to unambiguously recognize any selected code applied to a container.

Another significant advantage of the invention is the relative simplicity and reliability of the reading station arrangement. Incorrect readings due to variations of the transfer velocity of the conveyor system are eliminated.

A reading station is further readily adapted to correctly read out a code irrespective of whether a container having an encoding device of this invention mounted thereon is placed on the conveyor with the code pattern turned towards either the one or the opposite side of the conveying path.

C. Short Description of the Drawings

Fig. 1 is a front elevation view of an embodiment illustrative of an encoding device of the present invention;

Fig. 2 is a front elevation view of a movable slide included in the embodiment of fig. 1;

Fig. 3 is a cross-sectional view at an enlarged scale, of the encoding device shown in fig. 1 taken along plane III—III;

Fig. 4 is a front elevation view of a base portion included in an alternative embodiment of an encoding device of the invention;

Fig. 5 is a front elevation view of a movable slide which is designed to overlie the base portion of fig. 4 and in sliding relation therewith;

Fig. 6 is a diagrammatic view in perspective of a container having an encoding device of the invention mounted on its side, and light sensor means included in a reading station;

Fig. 7 is an encoding diagram to illustrate the principles underlying the present invention;

Fig. 8 is a diagram to illustrate an embodiment of a reading arrangement of the invention; and

Fig. 9 is a diagrammatic view in perspective of a container having an encoding device of the invention mounted on its side, and light sensor means configured for the implementation of an alternative embodiment of code reading apparatus having code error detecting features.

D. References

US patent 4,317,030.
French patent application 2 302 562.
German patent application 2233964.
French patent application 2 360 357.
US patent 3,751,640.
US patent 3,643,065.
French patent 2 031 646.
Netherlands patent application 8400688.

E. Detailed Description of the Drawings

It will be obvious that the invention is not limited to the following embodiments, which are specifically described in the context of encoding devices for applying a desired destination code to letter mail containers. Such a code is read by passing through one or more reading stations disposed along the conveying path, whereby signals are derived for automatically routing a container to its destination as represented by the selected code applied thereon.

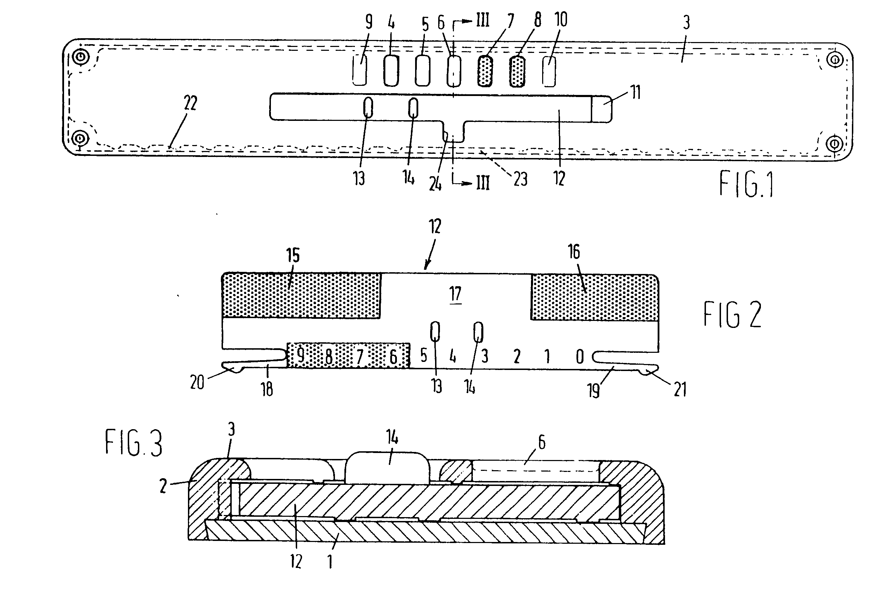

The embodiment shown in figures 1—3 is illustrative of an encoding device of the present invention. As shown specifically in fig. 3 this embodiment includes a base plate 1, which is designed to be held and supported on one side of a container. Preferably base plate 1 is made integrally with the container side surface. Base plate 1 has fixedly mounted thereon a housing 2 having a substantially flat upper sheet portion 3. Upper sheet portion 3 includes an array of n, in the embodiment shown five, equidistant window apertures 4 through 8. At the opposite ends of the array of apertures two rectangular surface areas 9 and 10 are provided on upper sheet portion 3, each having an optical reflectivity which is contrasting to the optical reflectivity of the remaining portion of upper sheet portion 3. For example areas 9 and 10 are white coloured while upper sheet portion 3 is black, i.e. light absorbing. Upper sheet portion 3 further includes an elongated slot 11, extending below and parallel to the array of window apertures. Mounted within housing 2 for slidable movement therein is a slide 12 having its upper surface which is shown in fig. 2 underlying upper sheet portion 3. Fixedly mounted on the upper surface of slide 12 are two manipulating knobs 13, 14, extending through elongated slot 11. When mounted within housing 2 the rectangular surface area including two light absorbing strips 15, 16 and an intermediate light reflecting strip 17 on slide 12, will be in alignment with the array of window apertures. The longitudinal dimension of intermediate strip 17 is selected to correspond with the longitudinal dimension of the array of window apertures 4—8. By manipulating knobs 13, 14 slide 12 is caused to selectively underlie the array of window apertures, so that the encoding device can be set to represent any one of $2n$ different and distinct code patterns.

The encoding diagram shown in fig. 7 is illustrative of ten distinct and different code patterns each including five binary code elements, together with their respective decimal value (code). The black coloured code elements correspond to light absorbing surface area portions of slide 12, while the white coloured code elements correspond to light reflecting surface area portions of slide 12 as made visible through the respecive window apertures 4—8 of upper sheet portion 3. As shown in fig. 2, slide 12 is provided with two resilient legs 18, 19 made integral with slide 12. Each leg at its free end is provided with a cam portion 20, 21 shaped and dimensioned to co-operate with fittingly shaped indentations 22 provided along an opposing longitudinal inner edge 23 provided within housing 2. By snap-in interaction between cam portions 20, 21 and indentations 22, slide 12 can be selectively set into a number of discrete and different positions wherein slide 12 is held firmly interlocked within housing 2. As further shown in fig. 2 slide 12 on its upper surface has a row of symbols, i.e. decimal digits 0 through 9. This row of symbols is disposed in alignment with an inspection window 24, which in the embodiment shown in fig. 1 has been recessed in elongated slot 11. The positions of the symbols, i.e. decimal digits 0 through 9, are selected to correspond with the associated code patterns in accordance with the relations as shown in fig. 7. With the above arrangement a selected code pattern and its decimal representation are simultaneously displayed via the array of window apertures 4—8 and the inspection window 24. Fig. 1 illustrates a code pattern including three consecutive "white" elements and two consecutive "black" elements, which code pattern represents the decimal value of 3, which is displayed through window 24. The above arrangement enables an operator to conveniently recognize the relation between a desired destination code (decimal digit) and its binary code representation.

In an alternative embodiment the decimal digits are provided on an elongated transparent area of upper sheet portion 3, while slide 12 has an indicator means adapted to slide along the stationary decimal digits in unison therewith to indicate a selected one of said symbols.

The above arrangement enables the operator to readily determine the direction along which slide 12 has to be shifted in order to change a current code setting into a desired other one.

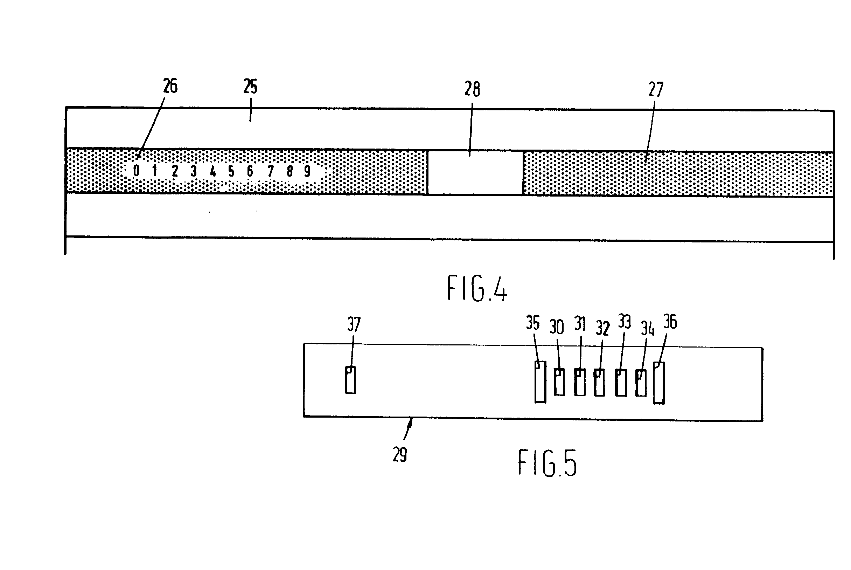

Still another embodiment of an encoding device of the invention will be described by making reference to figs. 4 and 5.

Fig. 4 illustrates a base portion 25 having means (not shown) for fixedly mounting this base portion on one side of a container. As schematically shown in fig. 4, base portion 25 includes two aligned rectangular surface areas 26 and 27 and an intermediate surface area 28. The optical reflectivity of areas 26 and 27 is contrasting to the optical reflectivity of intermediate surface area 28. In the embodiment shown areas 26 and 27 are light absorbing e.g. black, while area 28 is light reflecting, i.e. white.

Fig. 5 illustrates a slide 29, which together with base portion 25 of fig. 4 constitutes a two-part embodiment of an encoding device of the invention. In this embodiment slide 29 is mounted to overlie base portion 25 for slidable movement therealong. As shown in fig. 5 slide 29 includes an array of window apertures 30 through 34 and an inspection aperture 37. Similar to the embodiment of figs. 1—3, two rectangular surface areas 35, 36 are provided at the opposite ends of the array of window apertures. Their optical reflectivity; e.g. white coloured, is contrasting to the optical reflectivity of the remaining surface area of slide 29, which in this example is black.

In essence the above described embodiment is the same as the embodiments described above with reference to figs. 1—3. A point of difference is to be seen therein that in the former embodiment the array of window apertures 30—34, together with inspection aperture 37 and rectangular surface areas 35 and 36, are slidable relative to stationary mounted base portion 25.

In the embodiment shown in figs. 4 and 5 base portion 25 includes two guiding rails 38, 39 (not shown) extending in parallel to each other. These two guiding rails define therebetween a guiding path permitting slide 29 to be shifted longitudinally therealong. In this embodiment the row of symbols, more in particular the row of digits 0 through 9, are provided in longitudinal alignment with the reflecting surface area 28 on base portion 25. Slide 29 can be selectively set into ten distinct and different positions relative to base portion 25 to represent ten distinct and different code patterns each including five code elements such as 30, 31, 32, 33, 34. These code patterns and their assigned code representations are shown in the following table.

| 30 | 31 | 32 | 33 | 34 | code |
|----|----|----|----|----|------|
| 0  | 0  | 0  | 0  | 0  | 0    |
| 0  | 0  | 0  | 0  | 1  | 1    |
| 0  | 0  | 0  | 1  | 1  | 2    |
| 0  | 0  | 1  | 1  | 1  | 3    |
| 0  | 1  | 1  | 1  | 1  | 4    |
| 1  | 1  | 1  | 1  | 1  | 5    |
| 1  | 1  | 1  | 1  | 0  | 6    |
| 1  | 1  | 1  | 0  | 0  | 7    |
| 1  | 1  | 0  | 0  | 0  | 8    |
| 1  | 0  | 0  | 0  | 0  | 9    |

Herein "0" and "1", respectively correspond to a light absorbing, i.e. "black" and to a light reflecting, i.e. "white" code element, respectively. Each one of the code representations (digits 0 through 9) is perceivable via inspection window aperture 37 through slide 29.

In an alternative embodiment inspection aperture 37 through slide 29 is positioned above or below the middle window aperture 32. The row of digits 0 through 9 then is positioned above or below light reflecting area 28 on base portion 25.

The reference in the following description to a reading station as schematically shown in figs. 6 through 9 is for convenience only and is not intended to be interpreted a limitation on the invention described herein. The concepts of the invention apply equally to many other embodiments of reading stations. In general such a reading station is designed to implement following functions: to sense a selected code pattern of an encoding device mounted on a container being conveyed past the reading station position; to recognize the sensed code pattern for producing a control signal representing the selected code; and to produce in response to such control signal a command signal for setting a point (switch) included in the conveyor path configuration for routing the container to a desired destination corresponding to the sensed code pattern.

A preferred embodiment of an encoding device of the subject invention can be conveniently set to represent any one of 10 different and distinctive codes 0 through 9. As has been illustrated in figs. 6 and 9 each code is a combination of five distinctive binary code elements defined by window apertures such as 4 through 8, wherein each code element can be either a light reflecting rectangular area, or a light absorbing, i.e. non reflecting, rectangular area. At the opposite ends of such an array of five code elements, reference elements are provided in the form of light reflecting rectangular areas such as 9 and 10. In the illustrated embodiment reference element 10 represents a start bit and a stop bit as well, in case the container together with the encoding device mounted thereon is conveyed in the one direction as has been indicated by the arrow. This because the requirement has to be met that a container having an encoding device mounted thereon, can be placed on the conveyor into two distinctive and different positions, namely with its encoding device turned either to the one side, or to the other side of the conveyor path. Therefore a reading station includes two sets of code sensing devices disposed at the opposite sides of the conveyor as has been schematically shown in figs. 6 and 9. In the embodiment as shown in fig. 6 each code sensing device includes three photosensitive cells FCR1, FCR2, FAR and FCL1, FCL2, FAL respectively.

In an aspect of the invention sensor cells FCR1 and FCR2 (FCL1 and FCL2) are fixedly mounted with their respective receiving apertures aligned with the last code element 4 and the associated reference element 10 (9) as has been schematically shown in figs. 6 and 9. In another aspect of the invention the circuit arrangement for recognizing a selected code pattern is designed to respond to the trailing edges of the electric pulses delivered from the sensor elements when such code pattern and its fore-running reference element are passing by.

To illustrate the sensing-recognizing process reference will be made to figs. 6 and 7.

When a container with its encoding device mounted thereon, arrives at the reading station, the fore-running reference element 10 will be firstly sensed by sensor cell FCR1. This with the assumption that the container is conveyed in a direction as indicated by the arrow, while having the encoding device mounted on its side turned towards the code sensing device having cells FCR1, FCR2 and FAR included therein. Once reference element 10 has left the spatial area defined by the receiving aperture of sensor cell FCR1, i.e. on the occurrence of the trailing edge of the first electric pulse produced by cell FCR1, a counting process for counting the light reflecting code elements to follow, is enabled. Thereby the number of light reflecting code elements, i.e. white areas of the preset code, is counted. When the reference element 10 has come into alignment with the light sensor cell FCR2, the following functions will be implemented: the counting process is disabled in such a manner that in case code element 4, which then is aligned with sensor cell FCR1, would be white, this condition is included in the count; and the condition of last code element 4 (white or black) is examined by making a comparison between the signals delivered by sensor cells FCR1 and FCR2. Because in the situation outlined above sensor cell FCR2 is aligned with reference element 10, i.e. always white, the result of the above comparison operation unambiguously indicates whether said last code element 4, which then is aligned with sensor cell FCR1, is white or black. As appears from inspection of the code diagram shown in fig. 7, the condition of the last code element 4 is a criterion for determining whether a count of 1, 2, 3 or 4 represents code 1, 2, 3 or 4 on the one hand, or code 9, 8, 7 or 6 on the other. As will be further noted from fig. 7 a count of 5 and 0, respectively unambiguously represents code 5 and 0, respectively. Therefore the decoder is conveniently designed to produce an output signal indicative of codes 0, 1, 2, 3, 4 or 5, respectively, on the occurrence of a count of 0, 1, 2, 3, 4 or 5, respectively and in case last code element 4 has been found to be white, while an output signal indicative of codes 9, 8, 7 or 6, respectively is delivered on the occurrence of a count of 1, 2, 3 or 4, respectively and in case last code element 4 appeared to be black.

As has been pointed out hereinbefore, the reading station is designed to also implement its functions in the alternative situation wherein the container has been positioned on the conveyor with the encoding device mounted thereon turned towards the code sensing device including sensor cells FCL1, FCL2 and FAL. In this situation and assuming the direction of travel is the same as has been shown in figs. 6 and 9, the code pattern as depicted therein in the order: 10, 8, 7, 6, 5, 4, 9, is moving with its order reversed past sensor cells FCL1, FCL2 and FAL, i.e. in the order 9, 4, 5, 6, 7, 8, 10. In this alternative situation the number of "white" code elements is the same as in the situation shown in figs. 6 and 9. However, the position of the white elements has been shifted, while their order has been reversed. In order to cause the decoder to produce the same output signal irrespective of the position wherein the container has been placed onto the conveyor, in the above alternative situation, the signals from light sensor cell FCL1 are applied inverted to the decoder.

An important technical advantage of a system of the subject invention is found in the independence of speed of travel of containers being conveyed. For instance when counting the number of "white" code elements, it is irrelevant how long a sensor cell is irradiated by reflected light. This because a white code element increases the count by one only when it disappears.

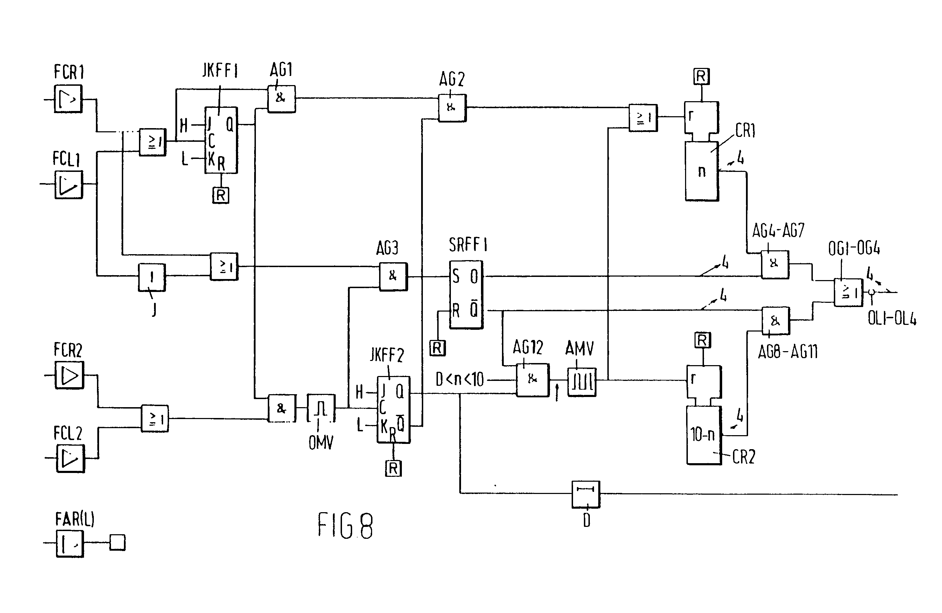

Fig. 8 shows a more detailed diagram of an embodiment illustrative of a reading station capable to implement the above described functions of sensing, counting and delivering the correct code representation. For disengaging the sensing/decoding arrangement, for timing the instant for executing a switching command for a point (switch), and for checking an encoding device, use has been made of position reporting cells such as FAR and FAL. Such cell includes a light emitting means producing a collimated beam of light radiation and a light receiving means having an aperture designed for receiving a pencil beam of light reflected from the container side. When for instance in the situation wherein a container having an encoding device mounted thereon arrives within the receiving aperture of light sensor cells FAR and/or FAL, these cells provide a signal whereby a reset condition of the reading circuit arrangement is disabled, thereby bringing the circuit arrangement in a state ready for accepting and processing signals from the other light sensor cells when the container continues to further proceed therealong. Once the container has left the receiving aperture of cells FAR and/or FAL, the reading circuit arrangement again is brought into its reset condition.

Fig. 8 schematically shows an embodiment to illustrate the principles of a reading device for recognizing a code pattern of an encoding device of this invention. Light sensor cells FCR1; FCR2; FCL1; FCL2; and FA correspond to the light sensor cells as shown in fig. 6. As has been shown in fig. 8 JK-flip-flops JKFF1 and JKFF2 have their respective J and K-inputs permanently on a high and a low level, respectively. Thereby a pulse signal applied to the C-input causes output Q to become high in response to its trailing edge, which condition irrespective of further pulses on the C-input, is sustained until a reset signal is applied to the R-input. By the combination of flip-flop JKFF1 and associated AND-gate AG1, pulse signals from cell FCR1 and FCL1 corresponding with white code elements such as 4, 5 and 6 only, in other words with the exclusion of a pulse signal corresponding to fore-running reference element such as 10, are delivered to a reset table counter CR1. The combination of flip-flop JKFF2 and associated AND-gate AG2 is effective to disable transfer of signals to counter CR1, as soon as the first white element "seen" by cell FCR2 (FCL2), i.e. reference element 10 (9), has passed therealong. Hereby white code elements only, in other words with the exclusion of after-running reference element such as 9 (10), are applied to counter CR1. The combination of AND-gate AG3 and SR-flip-flop SRFF1 implements the function of comparing the first white element seen by cell FCR2, i.e. reference element 10, and the condition of the code element which then concurrently is in alignment with cell FCR1, i.e. the code element as defined by window aperture 4.

As becomes apparent from inspection of the table shown in fig. 7, a match, i.e. the code element seen by light sensor cell FCR1 or FCL1 has the same value (white) as the reference element which then is in alignment with light sensor cell FCR2 or FCL2, indicates that the count then stored in counter CR1 has to be read out directly, i.e. unchanged. If a match occurs output Q of flip-flop SRFF1 will be high whereby each one of four AND-gates AG4—AG7 connected to the respective four output leads of counter CR1 is enabled. Thereby the count, i.e. the code representation of the code read out, stored in counter CR1, via AND-gates AG4—AG7 and OR-gates OG1—OG4 is delivered on four output leads OL1—OL4. The output signal thus obtained is further processed by means (not shown) to control a switching action or any other action desired.

If a mismatch occurs, i.e. the code element in alignment with light sensor cell FCR1 or FCL1 has another value (black) than the value of the reference element which is then in alignment with light sensor cell FCR2 or FCL2 the $\bar{Q}$-output of flip-flop SRFF1 will be high. Consequently, each one of four AND-gates AG8—AG11 is enabled, while AND-gates AG4—AG7 are disabled. Connected to the $\bar{Q}$-output of flip-flop SRFF1 is an AND-gate AG12, which is enable if following conditions occur concurrently:

$\bar{Q}$-output high; count (n) of counter CR1 satisfies the relation $0 < n < 10$; and Q-output of flip-flop JKFF2 high. When thus enabled, AND-gate AG 12 applies a start signal to an astable multivibrator AMV, which is designed to produce a train of HF pulses, for instance having a rate of 100 kc/s, for driving counter CR1 and an auxiliary counter CR2. Because in the arrangement shown in fig. 8, a binary control signal indicative of the current count n of counter CR1 (control signal is high if $0 < n < 10$, control signal is low if $n = o$ or $n = 10$) is applied to one input of AND-gate AG12, auxiliary counter CR2 is caused to count (10-n), if counter CR1 having a count (n) stored therein, is driven by AMV to count from n to 10. Once counter CR1 has reached a count of 10, AND-gate AG12 is disabled whereby counter CR2 is caused to stop at the count of 10-n. Via enabled AND-gates AG8—AG11 and OR-gates OG1—OG4, the count of auxiliary counter CR2 now is applied to output leads OL1—OL4.

OMV is a one-shot multivibrator for defining a time window pulse signal which enables AND-gate AG3 for an interval of time which is a certain fraction of a time interval corresponding with a single code element. The above time window pulse signal is of specific importance in situations wherein the "last" code elements which come into alignment with light sensor cell FCR1 or FCR2 are black. See fig. 7, for instance codes 6 through 9. The above time window pulse signal unambiguously defines a time slot corresponding to the "last" code element which has come into alignment with light sensor cell FCR1 or FCL1. In this connection it is to be recalled that due to the selected longitudinal distance between light sensor cells FCR1 and FCR2 (FCL1 and FCL2) it is ensured that a comparison is made between the leading (fore-running) reference element such as 10 and the last code element such as 4, which has come into alignment with light sensor cell FCR1 or FCL1. The signals produced by light sensor cell FCL1 are inverted by an inverter J before being applied to the above described comparator arrangement. Thereby it is ensured that irrespective of whether the encoding device of this invention is mounted on a container side turned towards light sensor cells FCR1, FCR2, FAR or to light sensor cells FCL1, FCL2, FAL, the same result is delivered to output leads OL1—OL4. The instant at which the Q-output of flip-flop JKFF2 goes high, is advantageously used as a reference for producing an enable signal on control lead CL for processing equipment adapted to utilize the output signal on output leads OL1—OL4. To this end the transitions on the Q-output of flip-flop JKFF2 are delayed through a delay device D. The delay introduced is selected to correspond to the time necessary for the counters CR1 and CR2 and associated circuitry to produce an output signal on output leads OL1—OL4. Light sensor cells FAR and FAL are positioned in such a manner that a reset signal R produced thereby, is disabled in as long as a container is in alignment with these cells.

As will be understood the various operations and functions described above with reference to fig. 8 can be readily implemented by many other embodiments without departing from the spirit and scope of the invention. For example a microprocessor controlled by an appropriate program can be advantageously employed for the code recognition and further processing functions.

A further embodiment of a reading station has as a special feature the capability of checking whether an encoding device has been damaged, has become untolerably covered with dust or dirt, and/or has stickers provided thereon, whereby the encoding device could cause the reading station to malfunction. In a situation wherein such a defective encoding device is conveyed past a reading station having the above special feature, an alarm can be produced, while the container with its defective encoding device thereon is routed into a side track. The design of a reading station having the above special feature, relies on the following characteristics of the code patterns employed:

a) code patterns for codes 0 through 4 have their fifth position, i.e. 5, coloured black;

b) code patterns for codes 5 through 9 have their fifth position, i.e. 5, coloured white;

c) in code patterns for codes 0 through 4, any white element which has passed a sensor cell cannot be followed by a black element;

d) in code patterns for codes 5 through 9, any black element which has passed a sensor cell cannot be followed by a white element;

e) when the conveyor is moving, the time interval wherein a light sensor cell is permitted to receive light radiation is restricted to a certain extent;

f) the first light sensor cell is not allowed to produce a number of pulses exceeding a value of seven;

g) the first and last light sensor cell must have seen simultaneously light radiation, when a container has passed along the reading apparatus; and

h) light sensor cells are allowed to see light and dark only at one side of the container.

In view of the above characteristics, at each side of the conveyor three light sensor cells, FC1, FC2, FC3 and FC1', FC2', FC3', are provided as has been schematically shown in figure 9. When a moving container arrives within the operating range of the reading apparatus, via light sensor cell FC1, the number of white code elements is counted until cell FC3 sees light. Once reference element 10 has passed by at one instant a check is made to determine whether cells FC1 and FC2 both see light. In the affirmative case the fifth code element, i.e. 5, is white which means that the code pattern under consideration corresponds to one of the code representations 5 through 9. If on the other hand cells FC1 and FC2 do not simultaneously see light, the fifth code element, i.e. 5, is black which means that the code pattern under consideration corresponds to one of the code representations 0 through 4. The result of these comparisons determines whether a check in view of point c) or d) above, has to be carried out. This can be done by means of cells FC1 and FC2. When at a certain instant of time cell FC3 sees light, a check in view of points f) and g) above can be carried out. With this check code error detection is feasible. Thereby an encoding device presenting a distorted code, for example due to a sticker which has been inadvertently disposed on one or more of the window apertures, can be detected and sorted out.

## Claims

1. An encoding device for applying an optically readable coded array of binary code elements to an article, including a first sheet (12; 25) and a second sheet (3; 29) overlying said first sheet (12; 25) and having an array of apertures (4—8; 30—34) therethrough, said first sheet (12; 25) having a distinct surface area (15, 16; 26, 27) with an optical reflectivity which is contrasting to the optical reflectivity of said second sheet (3; 29), whereby said apertures (4—8; 30—34) in a position overlying said distinct surface area (15, 16; 26, 27) provide said coded array, characterized in that

said array of apertures (4—8; 30—34) is disposed on a linear path;

said distinct area (15, 16; 26, 27) of said first sheet (12; 25) is shaped and dimensioned in such a manner that its longitudinal dimension corresponds to the longitudinal dimension of said linear path;

said first sheet (12; 25) and said second sheet (3; 29) are mounted for a relative sliding movement to each other for shifting said distinct area (15, 16; 26, 27) and said linear path relative to each other in a more or less overlapping way for selectively setting them in one out of at least 2n different relative positions to provide for one out of 2n possible different and distinct binary coded arrays, wherein n is the number of said apertures;

said second sheet (3; 29) having means for displaying a restricted area of said first sheet (12; 25) spaced from said distinct surface;

a row of 2n different symbols (decimal digits 0 through 9), representative for the 2n different coded arrays in a one-one correspondence, being provided within an elongated area of said first (12; 25) or said second (3; 29) sheet, whereby any selected one of said codes and its associated one of said symbols, respectively are simultaneously perceivable through said array and said display means, respectively.

2. An encoding device according to claim 1 characterized in that

said first sheet (12) is mounted for permitting a sliding movement relative to the overlying second sheet (3);

said elongated area is part of said restricted area;

said display means comprise an inspection window (24) for displaying any one of said symbols which corresponds to the selected one of said coded arrays.

3. An encoding device according to claim 1, characterized in that

said first sheet (12) is mounted for permitting a sliding movement relative to the overlying second sheet (3);

said display means comprise an inspection window being an elongated transparent area provided with said row of symbols;

said restricted area is provided with indicator means for indicating any one of said symbols which corresponds to the selected one of said coded arrays.

4. An encoding device according to claim 1 characterized in that

said second sheet (29) is mounted for permitting a sliding movement relative to the underlying first sheet (25);

said elongated area is part of said restricted area;

said displaying means comprise an inspection aperture (37) spaced apart from said array of apertures (30—34) for displaying any one of said symbols which corresponds to the selected one of said coded arrays.

5. An encoding device according to any one of the foregoing claims, characterized in that said second sheet (3; 29) has at least one reference surface area (9; 35) having an optical reflectivity which is contrasting to the optical reflectivity of its background on second sheet (3; 29), said reference surface area (9; 35) is provided at a front end position relative to said array of apertures (4—8; 30—34), when considered in the direction wherein the encoding device is intended to be conveyed.

6. An encoding device according to claim 4, characterized by a second reference surface area (10; 36) on said second sheet (3; 29), said second reference surface area (10; 36) having an optical reflectivity which is contrasting to the optical reflectivity of its background on said second sheet (3; 29), said at least one reference surface area (9; 35) and said second reference surface area (10; 36) are symmetrically positioned relative to opposite ends of said array of apertures (4—8; 30—34).

7. A reading device for use in combination with an encoding device according to claim 5 or 6 by bringing these devices into a passing movement relative to each other, in a direction mainly in parallel to said linear path the reading device comprising

(a) first light sensor means (FCR1; FC1 or FC2) for the reception of light beams during said movement consecutively reflected by said at least one reference surface area (10; 36) and said apertures of said array of apertures (4, . . . , 8; 30, . . . , 34);

(b) counting means (CR1) for counting the number of light beams reflected from said array of apertures (4, . . . , 8; 30, . . . , 34) consecutively received by said first light sensor means (FCR1; FC1 or FC2) after the reception of the light beam from said at least one reference surface area (10; 36);

(c) second light sensor means (FCR2; FC2 or FC3) for the reception of said light beams, in such a spaced relation to the first sensor means (FCR1; FC1 or FC2) as to permit the simultaneous reception of a light beam reflected by a reference surface area (10 or 9; 36 or 35) and a light beam reflected by one of said apertures (4; 30);

(d) comparator means (AG3, SRFF1) for comparing to each other signals simultaneously received from said first (FCR1; FC1 or FC2) and said second (FCR2; FC3) light sensor means, which signals are responsive to the reception of said light beams, to produce a control signal indicating that the compared signals have the same binary value or not; and

(e) control means (AG4—AG7; OG1—OG4, AG12, AMV, CR2, AG8—AG11) for producing an output signal (OL1—OL4) representing uniquely said selected one of said coded arrays, said output signal corresponds to said counted number or to the complement of said counted number with respect to 2n in dependence on said control signal.

8. A reading device according to claim 7 characterized by a third (FCL1; FC1′ or FC2′) and a fourth (FCL2; FC2′ or FC3′) light sensor means with functions identical with said first (FCR1; FC1 or FC2) light sensor means respectively; and inverting means (J) interconnecting one of said third and fourth light sensor means and said comparator means (AG3, SRFF1) for delivering an inverted signal thereto.

9. A reading device according to claim 7 or 8 characterized by auxiliary light sensor means (FAR, FAL; FA, FA′) mounted to receive light beams reflected from a container having the encoding device mounted thereon for providing control signals for controlling the operation of the reading device and for timing the switching action of a switch included in the conveying path of said container.

10. A reading device according to any one of the foregoing claims 7—9, characterized by code checking means responsive to certain code errors for producing an alerting signal indicative of a coding error.

11. A reading device according to claim 10, characterized by at least two light sensor means (FC1, FC2; FC1', FC2') mounted in spaced relation to each other for permitting concurrent reception of two light beams reflected from adjacent ones of said array of apertures.

12. A reading device according to any one of the foregoing claims 7—11, characterized by first auxiliary control means responsive to the trailing edge of a first pulse signal received from said first (FCR1; FC1) light sensor means responsive to the reception of the first light beam by said first light sensor means from the instant at which said reading device has been reset into its initial condition, for enabling said counting means (CR1) to count the number of following light beams consecutively received by said first light sensor means; and second auxiliary control means responsive to a second pulse signal received from said second light sensor means (FCR2; FC3) responsive to the reception of the first light beam by said second light sensor means from said instant, for disabling said counting means (CR1) and for enabling said control means to process said control signal from said comparator means (AG3, SRFF1).

**Patentansprüche**

1. Codiervorrichtung zum Anbringen einer optisch lesbaren codierten Reihe binärer Codierelemente auf einen Gegenstand, umfassend eine erste Karte (12; 25) und eine zweite Karte (3; 29), die auf der ersten Karte (12; 25) aufliegt und eine Reihe durchgehender Oeffnungen (4—8; 30—34) aufweist, wobei diese erste Karte (12; 25) eine ausgeprägte Oberflächenzone (15, 16; 26, 27) mit einem optischen Reflexionsvermögen aufweist, das sich in einem Gegensatz zum optischen Reflexionsvermögen der zweiten Karte (3; 29) befindet, und wobei diese Oeffnungen (4—8; 30—34) durch eine Lage, bei der diese ausgeprägte Oberflächenzone (15, 16; 26, 27) bedeckt wird, diese codierte Reihe liefern, dadurch gekennzeichnet,

dass diese Reihe Oeffnungen (4—8; 30—34) in einer linearen Bahn angeordnet ist;

dass diese ausgeprägte Zone (15, 16; 26, 27) dieser ersten Karte (12; 25) derart ausgebildet und dimensioniert ist, dass ihre Längsausdehnung der Längsausdehnung dieser linearen Bahn entspricht;

dass diese erste Karte (12; 25) und diese zweite Karte (3; 29) relativ zueinander gleitend bewegbar montiert sind, um diese ausgeprägte Zone (15, 16; 26, 27) und diese lineare Bahn relativ zueinander mehr oder weniger überlappend zu verschieben, um sie wahlweise in eine aus mindestens 2n verschiedenen relativen Positionen zu setzen, um eine aus 2n möglichen verschiedenen und unterschiedlichen binär codierten Reihen zu besorgen, worin n die Anzahl dieser Oeffnungen ist;

dass diese zweite Karte (3; 29) Mittel aufweist, um eine eingeschränkte Zone dieser ersten Karte (12; 25) in einem Abstand von dieser ausgeprägten Oberfläche anzuzeigen;

dass innerhalb einer länglichen Zone dieser ersten Karte (12; 25) oder dieser zweiten Karte (3; 29) eine Folge von 2n verschiedenen Symbolen (Zahlen 0 bis 9 im Dezimalsystem) vorgesehen ist, die die 2n verschiedenen codierten Reihen in einer eineindeutigen Zuordnung darstellen, wobei jeder aus diesen Codes selektierte Code und das ihm zugeordnete Symbol aus diesen Symbolen simultan durch diese Reihe bzw. diese Anzeigemittel wahrnehmbar sind.

2. Codiervorrichtung nach Anspruch 1, dadurch gekennzeichnet,

dass diese erste Karte (12) derart montiert ist, dass sich eine gleitende Bewegung bezüglich der daraufliegenden zweiten Karte (3) ergibt;

dass diese längliche Zone ein Teil dieser eingeschränkten Zone ist;

dass diese Anzeigemittel ein Einschaufenster (24) zur Anzeige irgendeines dieser Symbole umfasst, welches der selektierten Reihe aus diesen codierten Reihen entspricht.

3. Codiervorrichtung nach Anspruch 1, dadurch gekennzeichnet,

dass diese erste Karte (12) derart montiert ist, dass sich eine gleitende Bewegung bezüglich der daraufliegenden zweiten Karte (3) ergibt;

dass diese Anzeigemittel ein Einschaufenster umfassen, das eine längliche durchsichtige, mit dieser Folge von Symbolen versehene Zone ist;

dass diese eingeschränkte Zone mit Indikationsmitteln versehen ist, um irgendeines dieser Symbole anzugeben, welches der aus diesen codierten Reihen selektierten Reihe entspricht.

4. Codiervorrichtung nach Anspruch 1, dadurch gekennzeichnet,

dass diese zweite Karte (29) derart montiert ist, dass sich eine gleitende Bewegung bezüglich der daraufliegenden ersten Karte (25) ergibt;

dass diese längliche Zone ein Teil der eingeschränkten Zone ist;

dass diese Anzeigemittel eine Einschauöffnung (37) in einem Abstand von dieser Reihe Oeffnungen (30—34) zur Anzeige irgendeines dieser Symbole umfassen, welches der aus diesen codierten Reihen selektierten Reihe entspricht.

5. Codiervorrichtung nach einem der vorhergehenden Ansprüche, dadurch gekennzeichnet, dass diese zweite Karte (3; 29) mindestens eine Referenzoberflächenzone (9; 35) aufweist, die ein optisches Reflexionsvermögen hat, das in einem Gegensatz zum optischen Reflexionsvermögen von ihrem Hintergrund bei dieser zweiten Karte (3; 29) steht, wobei diese Referenzoberflächenzone (9; 35) in einer Stirnendlage bezüglich dieser Reihe Oeffnungen (4—8; 30—34) vorgesehen ist in der Richtung, in der die Codiervorrichtung transportiert werden soll.

6. Codiervorrichtung nach Anspruch 4, gekennzeichnet durch eine zweite Referenzoberflächenzone (10; 36) auf dieser zweiten Karte (3; 29) wobei diese zweite Referenzoberflächenzone (10; 36) ein optisches Reflexionsvermögen aufweist, das in einem Gegensatz zum optischen Reflexionsvermögen von ihrem Hintergrund bei dieser zweiten Karte (3; 29) steht, wobei diese mindestens eine Referenzoberflächenzone (9; 35) und diese zweite Referenzoberflächenzone (10; 36) symmetrisch angeordnet sind bezüglich gegenüberliegender Enden von dieser Reihe Oeffnungen (4—8; 30—34).

7. Lesevorrichtung zum Gebrauch in Verbindung mit einer Codiervorrichtung nach Anspruch 5 oder 6, indem diese Vorrichtungen in einer gegenseitigen Durchfahrtsbewegung gebracht werden in einer im wesentlichen parallelen Richtung zu dieser linearen Bahn, wobei die Lesevorrichtung umfasst:

(a) erste lichtempfindliche Mittel (FCR1; FC1 oder FC2) für den Empfang von Lichtstreifen während dieser Bewegung, die nacheinander durch diese mindestens eine Referenzoberflächenzone (10; 36) und diese Oeffnungen von dieser Reihe Oeffnungen (4, ..., 8; 30, ..., 34) reflektiert werden;

(b) Zählermittel (CR1) zum Zählen der Anzahl der von dieser Reihe Oeffnungen (4, ..., 8; 30, ...34) reflektierten Lichtstreifen, die von diesen ersten lichtempfindlichen Mitteln (FCR1; FC1 oder FC2) nacheinander empfangen werden nach dem Empfang vom Lichtstreifen aus dieser mindestens einen Referenzoberflächenzone (10; 36);

(c) zweite lichtempfindliche Mittel (FCR2; FC2 oder FC3) zum Empfang von diesen Lichtstreifen in einem solchen Abstandsverhältnis zu den ersten lichtempfindlichen Mitteln (FCR1; FC1 oder FC2), dass ein simultaner Empfang eines von einer Referenzoberflächenzone (10 oder 9; 36 oder 35) reflektierten Lichtstreifens und eines durch eine dieser Oeffnungen (4; 30) reflektierten Lichtstreifens möglich ist;

(d) Komparatormittel (AG3, SRFF1) zum Vergleichen mit jedem der anderen simultan von diesen ersten lichtempfindlichen Mitteln (FCR1; FC1 oder FC2) und diesen zweiten lichtempfindlichen Mitteln (FCR2 oder FCR3) empfangenen Signale, wobei diese Signale auf den Empfang dieser Lichtstreifen ansprechend sind, um ein Steuersignal zu erzeugen, das angibt, ob die verglichenen Signale denselben binären Wert haben oder nicht; und

(e) Steuermittel (AG4—AG7; OG1—OG4; AG12, AMV, CR2, AG8—AG11) zum Erzeugen eines Ausgangssignals (OL1—OL4), das lediglich diese aus dieser codierten Reihe selektierte Reihe darstellen, wobei dieses Ausgangssignal dieser gezählten Zahl oder dem Komplement dieser gezählten Zahl in bezug auf 2n in Abhängigkeit von diesem Steuersignal entspricht.

8. Lesevorrichtung nach Anspruch 7, gekennzeichnet durch dritte (FCL1; FC1' oder FC2') und vierte (FCL2; FC2' oder FC3') lichtempfindliche Mittel mit Funktionen, die entsprechend mit jenen dieser ersten lichtempfindlichen Mittel (FCR1; FC1 oder FC2) identisch sind; und invertierende Mittel (J), die zwischen diesen dritten und vierten lichtempfindlichen Mitteln und diesen Komparatormitteln (AG3, SRFF1) eingeschaltet sind, um denselben ein invertiertes Signal zu liefern.

9. Lesevorrichtung nach Anspruch 7 oder 8, gekennzeichnet durch zusätzliche lichtempfindliche Mittel (FAR, FAL; FA, FA'), die montiert sind, um Lichtstreifen zu empfangen, die von einem Behälter reflektiert werden, auf dem die Codiervorrichtung montiert ist, um Steuersignale zur Steuerung der Operation der Lesevorrichtung zu liefern und um die Schaltzeitwirkung eines Schalters einzustellen, der im Transportweg dieses Behälters vorhanden ist.

10. Lesevorrichtung nach einem der vorhergehenden Ansprüche 7 bis 9, gekennzeichnet durch Codekontrollmittel, die auf gewisse Codefehler ansprechbar sind, um ein Alarmsignal zu erzeugen, durch das ein Codierfehler angegeben wird.

11. Lesevorrichtung nach Anspruch 10, gekennzeichnet durch wenigstens zwei lichtempfindliche Mittel (FC1, FC2; FC1', FC2'), die in einem Abstandsverhältnis zueinander montiert sind, um einen zusammenfallenden Empfang von zwei Lichtstreifen zu ermöglichen, die von nebeneinanderliegenden Oeffnungen aus diesen Reihen von Oeffnungen reflektiert werden.

12. Lesevorrichtung nach einem der vorhergehenden Ansprüche 7 bis 11, gekennzeichnet durch erste zusätzliche Steuermittel, die auf die Rückflanke eines ersten Pulssignals ansprechbar sind, das von diesen ersten lichtempfindlichen Mitteln (FCR1; FC1) empfangen wird, die auf den Empfang des Empfang des ersten Lichtstreifens durch diese ersten lichtempfindlichen Mittel von dem Moment an ansprechbar sind, in dem diese Lesevorrichtung auf ihren Anfangswert zurückgesetzt wurde, um zu ermöglichen, dass diese Zählermittel (CR1) die Anzahl der folgenden Lichtstreifen zählt, die konsekutiv durch diese ersten lichtempfindlichen Mittel empfangen werden; und zweite zusätzliche Steuermittel, die auf ein zweites Pulssignal ansprechbar sind, das von diesen zweiten lichtempfindlichen Mitteln (FCR2; FC3) empfangen wird, die auf den Empfang des ersten Lichtstreifens durch diese zweiten lichtempfindlichen Mittel vom besagten Moment an ansprechbar sind, um diese Zählermittel (CR1) auszuschalten und zu ermöglichen, dass diese Kontrollmittel dieses Kontrollsignal von diesen Komparatormitteln (AG3, SRFF1) bearbeiten.

## Revendications

1. Dispositif de codage pour appliquer une suite codée lisible optiquement d'éléments de code binaire à un article, comportant une première feuille ou analogue (12; 25) et une seconde feuille ou analogue (3; 29) disposée par-dessus la première feuille (12; 25) et traversée d'une suite d'ouvertures (4—8; 30—34), la première feuille (12; 25) ayant une aire de surface distincte (15, 16; 26, 27) dont le pouvoir de réflexion optique contraste avec le pouvoir de réflexion optique de la seconde feuille (3; 29), les ouvertures (4—8;

30—34) formant la suite codée lorsqu'elles sont disposées par-dessus l'aire de surface distincte (15, 16; 26, 27), caractérisé en ce que

la suite d'ouvertures (4—8; 30—34) est disposée suivant un trajet linéaire;

l'aire distincte (15, 16; 26, 27) de la première feuille (12; 25) est conformée et dimensionnée de manière que sa dimension longitudinale corresponde à la dimension longitudinale du trajet linéaire;

la première feuille (12; 25) et la seconde feuille (3; 29) sont montées coulissantes l'une par rapport à l'autre, de manière que l'aire distincte (15, 16; 26, 27) et le trajet linéaire puissent être déplacés l'un par rapport à l'autre en se recouvrant plus ou moins, en vue de leur réglage sélectif à l'une d'au moins 2n positions relatives différentes, pour former une suite codée binaire parmi 2n de telles suites possibles, différentes et distinctes, n étant le nombre des ouvertures;

la seconde feuille (3; 29) possède des moyens pour afficher une aire restreinte de la première feuille (12; 25) espacée de la surface distincte;

une rangée de 2n symboles différents (chiffres décimaux 0 à 9) représentatifs des 2n suites codées différentes, suivant une correspondance d'un à un, étant prévue dans une aire de forme allongée de la première (12; 25) ou de la seconde feuille (3; 29), l'agencement étant tel qu'un quelconque code sélecté parmi lesdits codes et le symbole associé à lui peuvent être perçus simultanément à travers ladite suite et lesdits moyens d'affichage respectivement.

2. Dispositif de codage selon la revendication 1, caractérisé en ce que

la première feuille (12) est montée de manière à permettre un mouvement de coulissement par rapport à la seconde feuille (3) disposée par-dessus elle;

l'aire de forme allongée fait partie de l'aire restreinte;

les moyens d'affichage comprennent une fenêtre d'inspection (24) pour afficher l'un quelconque des symboles correspondant à la suite codée sélectée.

3. Dispositif de codage selon la revendication 1, caractérisé en ce que

la première feuille (12) est montée de façon à permettre un mouvement de coulissement par rapport à la seconde feuille (3) disposée par-dessus elle;

les moyens d'affichage comprennent une fenêtre d'inspection, constituée par une aire transparente de forme allongée et pourvue de ladite rangée de symboles;

l'aire restreinte est munie de moyens d'indication pour indiquer l'un quelconque des symboles correspondant à la suite codée sélectée.

4. Dispositif de codage selon la revendication 1, caractérisé en ce que

la seconde feuille (29) est montée de manière à permettre un mouvement de coulissement par rapport à la première feuille (25) disposée sous elle;

l'aire de forme allongée fait partie de l'aire restreinte;

les moyens d'affichage comprennent une ouverture d'inspection (37) disposée séparément à distance de ladite suite d'ouvertures (30—34), en vue de l'affichage de l'un quelconque des symboles correspondant à la suite codée sélectée.

5. Dispositif de codage selon l'une quelconque des revendications précédentes, caractérisé en ce que la seconde feuille (3; 29) possède au moins une aire de surface de référence (9; 35) ayant un pouvoir de réflexion optique qui contraste avec le pouvoir de réflexion optique de son fond sur la seconde feuille (3; 29), cette aire de surface de référence (9; 35) étant prévue à un emplacement d'extrémité avant, par rapport à la suite d'ouvertures (4—8; 30—34), considérée dans la direction suivant laquelle le dispositif de codage doit être transporté.

6. Dispositif de codage selon la revendication 4, caractérisé par une seconde aire de surface de référence (10; 36) sur la seconde feuille (3; 29), cette seconde aire de surface de référence (10; 36) ayant un pouvoir de réflexion optique qui contraste avec le pouvoir de réflexion optique de son fond sur la seconde feuille (3; 29), la première ou chaque première aire de surface de référence (9; 35) et la seconde aire de surface de référence (10; 36) étant disposées symétriquement par rapport à des extrémités opposées de la suite d'ouvertures (4—8; 30—34).

7. Dispositif de lecture destiné à être utilisé en combinaison avec un dispositif de codage selon la revendication 5 ou 6, en amenant ces dispositifs à effectuer un mouvement relatif de passage l'un devant l'autre, suivant une direction essentiellement parallèle audit trajet linéaire, le dispositif de lecture comprenant

(a) un premier moyen capteur de lumière (FCR1; FC1 ou FC2) pour la réception de faisceaux lumineux pendant ledit mouvement, faisceaux qui sont réfléchis consécutivement par la première ou chaque première aire de surface de référence (10; 36) et les ouvertures de la suite d'ouvertures (4, . . . , 8; 30, . . . , 34);

(b) un moyen de comptage (CR1) pour compter le nombre de faisceaux lumineux réfléchis par la suite d'ouvertures (4, . . . , 8; 30, . . . , 34) et reçus consécutivement par le premier moyen capteur de lumière (FCR1; FC1 ou FC2) après la réception du faisceau lumineux venant de la première ou de chaque première aire de surface de référence (10; 36);

(c) un deuxième moyen capteur de lumière (FCR2; FC2 ou FC3) pour la réception des faisceaux lumineux, prévu dans une telle relation espacée par rapport au premier moyen capteur (FCR1; FC1 ou FC2), qu'un faisceau lumineux réfléchi par une aire de surface de référence (10 ou 9; 36 ou 35) et un faisceau lumineux réfléchi par l'une des ouvertures (4; 30) peuvent être reçus simultanément;

(d) un moyen comparateur (AG3, SRFF1) pour comparer l'un à l'autre des signaux reçus simultanément du premier (FCR1; FC1 ou FC2) et du deuxième moyen capteur de lumière (FCR2; FC3), les signaux étant fournis en réponse à la réception des faisceaux lumineux, en vue de la production d'un signal de contrôle indiquant que les signaux comparés ont la même valeur binaire ou non; et

(e) un moyen de contrôle (AG4—AG7; OG1—OG4, AG12, AMV, CR2, AG8—AG11) pour produire un signal de sortie (OL1—OL4) représentant uniquement la suite codée sélectée, ce signal de sortie correspondant au nombre compté ou au complément du nombre compté par rapport à 2n, en fonction du signal de contrôle.

8. Dispositif de lecture selon la revendication 7, caractérisé par un troisième (FCL1; FC1' ou FC2') et un quatrième (FCL2; FC2' ou FC3') moyen capteur de lumière, ayant des fonctions identiques à celles du premier moyen capteur de lumière (FCR1; FC1 ou FC2) respectivement; et un moyen d'inversion (J) interconnectant l'un des troisième et quatrième moyens capteurs de lumière et le moyen comparateur (AG3, SRFF1) pour délivrer à celui-ci un signal inversé.

9. Dispositif de lecture selon la revendication 7 ou 8, caractérisé par des moyens capteurs de lumière auxiliaires (FAR, FAL; FA, FA') montés pour recevoir des faisceaux lumineux réfléchis par un récipient sur lequel est monté le dispositif de codage, en vue de la génération de signaux de contrôle pour contrôler le fonctionnement du dispositif de lecture et pour synchroniser l'action d'aiguillage d'un aiguillage incorporé dans le trajet de transport du récipient.

10. Dispositif de lecture selon l'une quelconque des revendications 7—9 précédentes, caractérisé par des moyens de contrôle de code sensibles à certaines erreurs de code et pour produire, en réponse, un signal d'alarme indiquant une erreur de codage.

11. Dispositif de lecture selon la revendication 10, caractérisé par au moins eux moyens capteurs de lumiere (FC1, FC2; FC1', FC2') montés à distance l'un de l'autre, de manière à permettre la réception simultanée de deux faisceaux lumineux réfléchis à partir d'ouvertures voisines de ladite suite d'ouvertures.

12. Dispositif de lecture selon l'une quelconque des revendications 7—11 précédentes, caractérisé par un premier moyen de contrôle auxiliaire sensible au flanc arrière d'un premier signal impulsionnel reçu du premier moyen capteur de lumière (FCR1; FC1), en réponse à la réception du premier faisceau lumineux par le premier moyen capteur de lumière à partir de l'instant auquel le dispositif de lecture a été remis à son état initial, afin de permettre au moyen de comptage (CR1) de compter le nombre de faisceaux lumineux suivants, reçus consécutivement par le premier moyen capteur de lumière; et un second moyen de contrôle auxiliaire, sensible à un second signal impulsionnel reçu du deuxième moyen capteur de lumière (FCR2; FC3) en réponse à la réception du premier faisceau lumineux par le deuxième moyen capteur de lumière à partir dudit instant, afin de rendre inopérant le moyen de comptage (CR1) et de permettre au moyen de contrôle de traiter ledit signal de contrôle reçu du moyen comparateur (AG3, SRFF1).

EP 0 155 050 B1

FIG.1

FIG 2

FIG.3

EP 0 155 050 B1

26  25  28  27

0 1 2 3 4 5 6 7 8 9

FIG.4

37  35 30 31 32 33 34 36

29

FIG.5

FIG 6

FCLI  FCL2  FAL

SI 1 2 3 4 5 S2

FCRI  FCR2  FAR

FIG.7

| | 1 | 2 | 3 | 4 | 5 | | |
|---|---|---|---|---|---|---|---|
| | ■ | ■ | ■ | ■ | ■ | 0 | 0 |
| | □ | ■ | ■ | ■ | ■ | 1 | 1 |
| | □ | □ | ■ | ■ | ■ | 2 | 2 |
| | □ | □ | □ | ■ | ■ | 3 | 3 |
| | □ | □ | □ | □ | ■ | 4 | 4 |
| | □ | □ | □ | □ | □ | 5 | 5 |
| | ■ | □ | □ | □ | □ | 4 | 6 |
| | ■ | ■ | □ | □ | □ | 3 | 7 |
| | ■ | ■ | ■ | □ | □ | 2 | 8 |
| | ■ | ■ | ■ | ■ | □ | 1 | 9 |

FIG 9

FCI' FC2'  FC3'  FA

SI 1 2 3 4 5 S2

FCI FC2  FC3  FA

FIG 8

EP 0 155 050 B1